# EUROPÄISCHE PATENTANMELDUNG

(11) **EP 0 978 709 A2**
(43) Veröffentlichungstag der Anmeldung: **09.02.2000**
(21) Anmeldenummer: 99115606.8
(22) Anmeldetag: 06.08.1999
(51) Int. Cl.: G01F 1/06

(54) **Durchflussmesser für Flüssigkeiten**

(30) Priorität: 07.08.1998 DE 19835924
(71) Anmelder: BSH Bosch und Siemens Hausgeräte GmbH, 81669 München (DE)
(72) Erfinder: Berthold, Arndt, Dipl.-Ing., 10369 Berlin (DE)

(57) **Zusammenfassung**

In einem Durchflußmesser 1 ist ein kreisförmiger Kanal ausgebildet, in dem ein frei beweglicher Körper 5 eingeschlossen ist. Die Flüssigkeit 9 strömt durch eine Einlaßöffnung 3 im wesentlichen tangential ein und erzeugt eine Strömung in dem Kanal, die den Körper 5 entlang einer geschlossenen Bahn 6 in dem kreisförmigen Kanal bewegt. Die Flüssigkeit 9 kann an einem Abschnitt 8 des Kanals, der für die Flüssigkeit durchlässig ist, durch eine Auslaßöffnung 4 wieder herausströmen. Die Umläufe des Körpers 5 entlang der geschlossenen Bahn 6 werden von eine Lichtschranke erfaßt. Der Durchfluß der Flüssigkeit 9 kann aus der Anzahl der Umläufe je Zeiteinheit beziehungsweise der Zeit für eine bestimmte Anzahl von Umläufen ermittelt werden. Der erfindungsgemäße Durchflußmesser 1 ist störunempfindlich, benötigt keine Drehlager, arbeitet auch bei geringen Durchflüssen genau, stellt keine hohen Anforderungen an die verwendeten Materialien und läßt sich einfach in bereits vorhandene Geräteteile insbesondere aus Kunststoff integrieren.

## Beschreibung

Die Erfindung betrifft Durchflußmesser für Flüssigkeiten.

Für die Durchflußmessung von Flüssigkeiten sind zahlreiche Vorrichtungen bekannt, die nach sehr verschiedenen Funktionsprinzipien arbeiten. In der Praxis werden oft Rotormeßgeräte eingesetzt, bei denen ein drehbar gelagerter Rotor von der Flüssigkeitsströmung in Drehrichtung angetrieben wird und dessen Umdrehungen um seine Achse als Maß für die Strömungsgeschwindigkeit beziehungsweise den Durchfluß erfaßt werden. Bei den hauptsächlich eingesetzten Flügelradzählern ist der Rotor als Propeller, Turbine, Zahnrad oder allgemein als Flügelrad ausgebildet. Daneben werden als Rotoren aber auch außermittig oder tangential angeströmte Zylinder oder Scheiben verwendet.

Rotormeßgeräte lassen sich einfach aufbauen, weisen jedoch insbesondere folgende Nachteile auf. In der Regel besteht zwischen dem Rotor und dem Gehäuse ein geringer Abstand, insbesondere um die von dem Rotor nicht erfaßte Strömung gering zu halten und die Meßgenauigkeit zu erhöhen. Allerdings können sich so leicht Störkörper oder Verunreinigungen zwischen Rotor und Gehäuse verklemmen und die Funktion beeinträchtigen. An den Rotoren können sich Ablagerungen bilden, die zu Meßfehlern führen und ebenfalls die Funktion beeinträchtigen können. Ferner verringert die Lagerreibung die Meßgenauigkeit und führt dazu, daß eine zuverlässige Messung erst ab einem gewissen Durchfluß möglich ist, wobei die Lagerreibung im Laufe der Zeit durch Ablagerungen weiter zunehmen kann. Daneben besteht bei Drehlagern die Gefahr, daß sich fadenförmige Störkörper in der Flüssigkeit um die Drehachse wickeln und so den Rotor bremsen oder sogar blockieren können. Um bei Drehlagern eine zufriedenstellende Funktion zu gewährleisten, müssen teure Lagerwerkstoffe eingesetzt werden, die nachteiligerweise die Fertigungskosten erhöhen.

Aus der DE 2 026 131 A1 ist ferner ein Rotormeßgerät bekannt, bei dem ein zylinderförmiger Rotor durch die Flüssigkeitsströmung radial und axial innerhalb des Gehäuses zentriert wird, wodurch die Drehlager für den Rotor entfallen können.

Auch bei diesem Rotormeßgerät ist der Abstand zwischen Rotor und Gehäuse klein, insbesondere, da zur Zentrierung des Rotors durch die Flüssigkeitsströmung eine Wechselwirkung mit dem Gehäuse erforderlich ist. Daher sind auch diese Rotormeßgeräte sehr empfindlich gegenüber Verunreinigungen oder Störkörpern. Bei zu geringer Strömungsgeschwindigkeit wird der achslose Rotor nicht richtig zentriert oder berührt das Gehäuse, wodurch unterhalb eines gewissen Durchflusses eine Messung nicht mehr oder nur sehr schlecht möglich ist. Um die Selbstzentrierung des Rotors durch die Flüssigkeitsströmung zu erreichen, sind mehrere genau berechnete, über den Umfang verteilte Flüssigkeitseinlaß- und Flüssigkeitsauslaßöffnungen erforderlich, die für den Anschluß an einen Zulauf beziehungsweise einen Ablauf jeweils zusammengefaßt werden müssen und zusätzlich die Fertigungskosten erhöhen.

Sämtliche bekannten Rotormeßgeräte weisen somit die Nachteile auf, erst ab einem gewissen Durchfluß zu arbeiten, störanfällig und relativ teuer zu sein.

Weiterhin existieren auch zahlreiche Durchflußmesser anderer Art, wie beispielsweise Wirbelzähler-, Induktions-, Coriolis- oder Ultraschalldurchflußmesser, die zwar eine hohe Genauigkeit und einen großen Meßbereich besitzen, jedoch sehr aufwendig und entsprechend teuer sind und für zahlreiche Anwendungsfälle allein daher nicht in Betracht kommen.

Aufgabe der vorliegenden Erfindung ist es, einen Durchflußmesser für Flüssigkeiten zu schaffen, der kostengünstig herstellbar, nicht störanfällig und unempfindlich gegen Ablagerungen ist sowie insbesondere auch bei geringen Durchflüssen eine hohe Genauigkeit aufweist.

Erfindungsgemäß wird diese Aufgabe gelöst durch einen Durchflußmesser für eine Flüssigkeit mit einem Gehäuse, das wenigstens eine Einlaßöffnung und wenigstens eine Auslaßöffnung aufweist und von der Flüssigkeit durchströmt wird, und wenigstens einem beweglichen Körper im Inneren des Gehäuses, der von der Flüssigkeitsströmung entlang einer geschlossenen Bahn bewegt wird, wobei die Umläufe des wenigstens einen Körpers entlang der geschlossenen Bahn erfaßt werden.

Auf diese Weise kann ein ausreichender Abstand zwischen dem wenigstens einen beweglichen Körper und dem Gehäuse eingehalten werden, um störende Einflüsse von Verunreinigungen oder Störkörpern zu vermeiden. Da keine Drehachse zur Lagerung nötig ist, besteht auch keine Gefahr, daß sich fadenförmige Störkörper darum wickeln und die Funktion des Durchflußmessers beeinträchtigen. Mit der Drehachse entfällt auch die Lagerreibung und der zusätzliche Kosten- und Fertigungsaufwand für Drehlager und insbesondere für die Lagerwerkstoffe. Ein solcher Durchflußmesser läßt sich einfach und kostengünstig beispielsweise aus einem zweiteiligen Gehäuse und einem darin angeordneten Körper fertigen, wobei alle Teile aus preiswertem Material sein können, da keine besonderen Ansprüche an die Materialeigenschaften gestellt werden. Im Verlauf der Bewegung des wenigstens einen Körpers auf seiner Bahn wird er regelmäßig innen am Gehäuse anschlagen und so möglicherweise vorhandene Ablagerungen lösen. Auf diese Weise findet eine Selbstreinigung des Gehäuses und des wenigstens einen Körpers darin statt, wodurch der Durchflußmesser wesentlich unempfindlicher gegen Ablagerungen ist.

Eine sichere Durchflußmessung ist bereits mit einem von der Strömung bewegten Körper möglich. Dabei kann als direktes Maß für die Strömungsgeschwindigkeit und damit für den Durchfluß die Anzahl der Umläufe pro Zeiteinheit verwendet werden oder als umgekehrt proportionales Maß die Zeitdauer für einen oder mehrere Umläufe. Es können aber auch mehrere Körper eingesetzt werden, wodurch je Zeiteinheit mehr Umläufe erfaßt werden. Auf diese Weise kann durch den Einsatz mehrerer Körper eine höhere Auflösung der Messung in der gleichen Zeitdauer erreicht wird.

Die Umläufe des wenigstens einen Körpers können optisch erfaßt werden, beispielsweise durch eine Transmissionslichtschranke oder eine Reflexlichtschranke. Die dafür erforderlichen optischen Bauteile sind kostengünstig und lassen sich problemlos mit einer elektronische Steuerung verbinden, die ebenfalls kostengünsig aufgebaut werden kann und in nahezu allen Geräten vorhanden ist, in denen ein erfindungsgemäßer Durchflußmesser gegebenenfalls eingebaut werden soll. Der Körper wird durch die berührungslose optische Erfassung vorteilhafterweise nicht beeinflußt.

Die Erfassung der Umläufe kann auch magnetisch oder induktiv erfolgen, indem beispielsweise der Körper aus einem magnetischen Material ausgebildet oder mit einem Magneten versehen ist und dessen Bewegungen mit einem Magnetfeldsensor, insbesondere einer Hallsonde, einem Reedkontakt oder einem Induktionsaufnehmer erfaßt werden. Solche Verfahren ermöglichen auch die sichere Erfassung der Umläufe bei einer nicht transparenten Flüssigkeit, beispielsweise aufgrund von Verunreinigungen, oder durch ein nicht transparentes Gehäuse hindurch, sofern es aus nicht magnetisierbarem Material besteht.

Der wenigstens eine Körper kann durch die Innenflächen des Gehäuses und/oder durch in bestimmter Weise im Gehäuse angeordnete Hindernisse auf die geschlossene Bahn gezwungen werden. Dazu kann im Inneren des Gehäuses eine Kanal ausgebildet sein, dessen Begrenzungen den wenigstens einen Körper zurückhalten, wobei die Begrenzungen wenigstens an manchen Stellen für die Flüssigkeit durchlässig sein können, um das Ausströmen der Flüssigkeit zu ermöglichen. Beispielsweise kann dazu im Mittelpunkt eines flachen Rundgehäuses mit einer ringförmigen Innenseite ein Zylinder angeordnet sein, um den sich der wenigstens eine Körper in einem Kanal herumbewegt, der von der Gehäuseoberseite, der Gehäuseunterseite, der ringförmigen Innenseite und dem Zylindermantel begrenzt wird.

Daher kann die Bahn durch konstruktive Maßnahmen festgelegt werden. Insbesondere können auf diese Weise die Vorrichtung zum Erfassen der Umläufe und die Bahn zueinander so angeordnet werden, daß der wenigstens eine Körper sich in jedem Falle nahe genug an der Vorrichtung vorbeibewegt, um dessen Umläufe sicher erfassen zu können.

Die Flüssigkeitsströmung kann im Gehäuse statt dessen einen Wirbel bilden und den wenigstens einen Körper entlang des Wirbels auf einer geschlossenen Bahn halten. Dies kann durch die innere Form des Gehäuses und die Art, in der die Flüssigkeit in das Gehäuse strömt, erreicht werden. Dazu kann das Gehäuse innen zylinderförmig ausgebildet sein, und der Flüssigkeitseinlaß derart angeordnet beziehungsweise ausgerichtet sein, daß die Flüssigkeit im wesentlichen tangential einströmt. Der Flüssigkeitsauslaß kann in der Zylinderwand angeordnet sein oder aber im wesentlichen mittig in der Ober- beziehungsweise Unterseite des Zylinders. Der Fertigungsaufwand kann auf diese Weise weiter verringert werden.

Vorteilhafterweise strömt die Flüssigkeit durch die wenigstens eine Einlaßöffnung in einem flachen Winkel zur geschlossenen Bahn des wenigstens einen Körpers in das Gehäuse ein. Auf diese Weise wird eine Strömung entlang der Bahn erzeugt, die den wenigstens einen Körper antreibt. Insbesondere bei kleinen Durchflüssen ist vorteilhaft, daß bereits eine gleichmäßige und eindeutig gerichtete Strömung zum Antrieb des wenigstens einen Körpers ausgebildet ist.

Von besonderem Vorteil ist es, wenn im Inneren des Gehäuses wenigstens ein Hindernis angeordnet ist, durch das die Flüssigkeit hindurchströmen kann und das eine Bewegung des wenigstens einen Körpers zu der wenigstens einen Auslaßöffnung hin verhindert. So kann einerseits vermieden werden, daß der wenigstens eine Körper durch die Flüssigkeitsströmung an der Auslaßöffnung festgehalten wird und sich nicht mehr bewegt, und andererseits kann er unabhängig vom genauen Verlauf der Flüssigkeitsströmung auf einer vorgegebenen Bahn gehalten werden. Die Hindernisse können als Wand mit mehreren Durchbrüchen, die kleiner als der wenigstens eine Körper sind, oder als Wand mit einem schlitzförmigen Durchbruch oder mit kreisförmigen Rippen ausgebildet sein, dessen bzw. deren Breite geringer ist als die kleinste Abmessung des wenigstens einen Körpers.

Die Bahn, entlang derer sich der wenigstens eine Körper und gegebenenfalls auch die Flüssigkeitsströmung bewegt, ist vorteilhafterweise kreisförmig. Dadurch werden geringe Strömungsverluste und ein geringer Druckverlust im Durchflußmesser erreicht.

Der wenigstens eine Körper kann vorteilhafterweise eine Kugelform aufweisen, die sich einfach herstellen läßt und bei der die Gefahr gering ist, daß der wenigstens eine Körper im Gehäuse sich verhakt, verklemmt oder verkantet.

In einer weiteren Ausführungsform besitzt der wenigstens eine Körper im wesentlichen das gleiche spezifische Gewicht wie die Flüssigkeit, so daß er in der Flüssigkeit schwebt und sich auch durch eine sehr geringe Strömung bewegen läßt. In einem solchen Fall hat auch die Einbaulage und -ausrichtung des Durchflußmessers keinen oder einen nur sehr geringen Einfluß auf dessen Funktion. So wird eine sichere Funktion und eine genaue Messung insbesondere auch bei niedrigen Durchflüssen und jeder Einbaulage erreicht.

Da an die Materialeigenschaften keine besonderen Anforderungen gestellt werden, können die Teile aus verschiedensten Werkstoffen, insbesondere auch aus Kunststoff, gefertigt werden. Der erfindungsgemäße Durchflußmesser kann aus diesem Grund und wegen seines einfachen Aufbaus auch in Teile eines eine Flüssigkeit führendes Geräts zusätzlich integriert werden, indem sein Gehäuse in einem Teil des Geräts ausgebildet wird. Das Teil selbst ist vorzugsweise eines, das die Flüssigkeit führt, deren Durchfluß gemessen werden soll, jedoch ursprünglich nicht als Durchflußmesser konzipiert war, sondern zu einem anderen Zweck ohnehin vorgesehen war. Das Gehäuse des Durchflußmessers kann dann besonders vorteilhaft in diesem Teil im Flüssigkeitsweg zusätzlich ausgebildet werden, so daß der Durchflußmesser ohne besonderen Aufwand in dem flüssigkeitsführenden Gerät nachgerüstet werden kann. Dies ist besonders bei Kunststoffspritzgußteilen vorteilhaft.

Einsetzen läßt sich ein solcher integrierter Durchflußmesser beispielsweise in besonders vorteilhafter Weise in einem Haushaltgerät, insbesondere in einer Wäschebehandlungsmaschine oder einer Geschirrspülmaschine. Bei solchen, in hohen Stückzahlen gefertigten Maschinen der Kosumgüterindustrie hängt der Einsatz eines solchen Durchflußmessers, dessen Meßergebnisse in die Behandlungsprozesse erheblich verbessemder Weise verwertet werden können, entscheidend davon ab, daß er billig ist und kostengünstig in der Maschine eingesetzt werden kann. Als Kunststoffteile, in die der Durchflußmesser integriert werden kann, kommen bei Wäschebehandlungsmaschinen beispielsweise ein Wasserzulaufkörper beziehungsweise eine Waschmitteleinspüleinrichtung in Betracht.

Weitere Einzelheiten, Merkmale und Vorteile der Erfindung ergeben sich aus der nachstehenden Beschreibung eines Ausführungsbeispiels unter Bezugnahme auf die Zeichnungen. Darin zeigen
- Fig. 1: ein Schnitt durch einen erfindungsgemäßen Durchflußmesser in einer Ebene der Bewegungsbahn des Körpers und
- Fig. 2: eine seitliche Schnitansicht entlang der Schnittlinie A-A am erfindungsgemäßen Durchflußmesser.

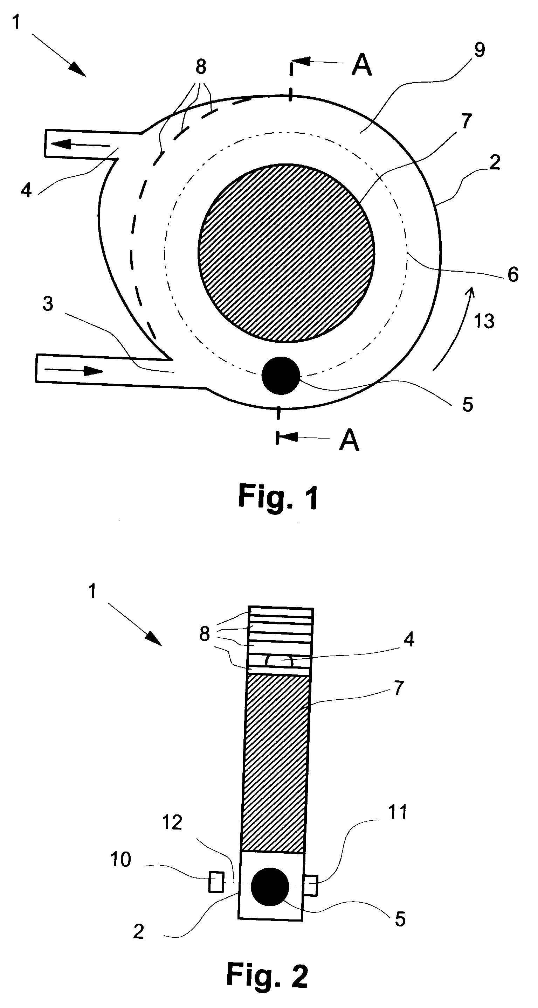

In Figur 1 ist ein erfindungsgemäßer Durchflußmesser 1 mit einem Gehäuse 2 abgebildet, das eine Einlaßöffnung 3 und eine Auslaßöffnung 4 aufweist, durch die eine Flüssigkeit 9 in das Gehäuse ein- beziehungsweise ausströmt. Das Gehäuse 2 ist über einen großen Abschnitt kreisrund und weist in der Nähe der Auslaßöffnung 4 eine Ausbuchtung auf. Im Inneren des Gehäuses 2 befindet sich ein frei beweglicher Körper 5, der die Form einer Kugel und im wesentlichen das gleiche spezifische Gewicht wie die Flüssigkeit 9 besitzt.

Vor der Auslaßöffnung 4 befindet sich ein Hindernis 8 in Form einer Wand mit regelmäßig angeordneten Durchbrüchen. Das Hindernis 8 erstreckt sich in einem Bogen mit gleicher Krümmung wie der kreisrunde Abschnitt des Gehäuses 2 bis nahe zur Einlaßöffnung 3. In der Zeichnung sind beispielhaft nur einige der Teile des Hindernisses 8 mit einer Bezugsziffer versehen. Die Durchbrüche des Hindernisses 8 sind derart bemessen, daß der frei bewegliche Körper 5 nicht durch sie hindurchpaßt. Der kreisrunde Abschnitt der Innenseite des Gehäuses 2 bildet auf diese Weise zusammen mit dem Hindernis 8 eine kreisrunde äußere Begrenzung für den Körper 5.

Im Inneren der Gehäuses 2 ist weiterhin ein zylinderförmiges Hindernis 7 konzentrisch zum kreisrunden Abschnitt des Gehäuses 2 angeordnet. Das zylinderförmige Hindernis 7 erstreckt sich über die gesamte Höhe des Gehäuseinnenraums und begrenzt zusammen mit dem Hindernis 8, dem kreisförmigen Abschnitt des Gehäuses 2, der Ober- und der Unterseite des Gehäuses einen kreisförmigen Kanal, in dem der Körper 5 eingeschlossen ist und sich entlang einer geschlossenen Bahn 6 bewegen kann.

Die Flüssigkeit 9 strömt durch die Einlaßöffnung 3 im wesentlichen tangential zur Bahn 6 in das Gehäuse 2 ein, wodurch sich eine Strömung in Richtung des Pfeils 13 um das Hindernis 7 herum ausbildet. Durch die Auslaßöffnung 4, die nach ungefähr einer dreiviertel Umdrehung in Strömungsrichtung hinter dem für die Flüssigkeit durchlässigen Hindernis 8 angeordnet ist, kann die Flüssigkeit wieder ausströmen. Dabei ist das gesamte Gehäuse 2 mit Flüssigkeit gefüllt, so daß sich um das zylinderförmige Hindernis 7 herum eine kreisförmige Strömung ausbildet, die den Körper 5 entlang der Bahn 6 in Richtung des Pfeils 13 bewegt.

Fig. 2 zeigt den entlang einer Schnittlinie A-A in Fig. 1 geschnittenen Durchflußmesser 1. In dieser Ansicht sind unten links vom Kanal, in dem sich der Körper 5 bewegt, ein Lichtsender 10 und rechts vom Kanal ein Lichtempfänger 11 angeordnet. Der Lichtsender 10 sendet einen Lichtstrahl 12 durch den Kanal, der die Bahn 6 des Körpers 5 schneidet, zum Lichtempfänger 11. Der Körper 5 verursacht bei jedem Umlauf der Bahn 6 eine Unterbrechung des Lichtstrahls 12, die vom Lichtempfänger 11 erfaßt wird. Die Strömungsgeschwindigkeit beziehungsweise der Durchfluß der Flüssigkeit 9 kann aus der Anzahl der Umläufe je Zeiteinheit beziehungsweise der Zeit für eine bestimmte Anzahl von Umläufen mittels des Lichtempfängers 11 bestimmt werden. Zum Einbau des Durchflußmessers 1 in ein flüssigkeitsführendes Gerät kann das Gehäuse 2 in einem ohnehin vorhandenen flüssigkeitsführenden Teil insbesondere aus Kunststoff ausgebildet werden, so daß der Fertigungsaufwand weiter verringert wird.

Durch die erfindungsgemäße Lösung wird somit ein Durchflußmesser geschaffen, mit dem bei sehr geringem Kosten- und Fertigungsaufwand eine hohe Unempfindlichkeit gegenüber Verunreinigungen und Störkörpern in der Flüssigkeit sowie eine hohe Meßgenauigkeit insbesondere auch bei geringen Durchflüssen erreicht werden kann.

## Patentansprüche

1. Durchflußmesser (1) für eine Flüssigkeit (9) mit einem Gehäuse (2), das wenigstens eine Einlaßöffnung (3) und wenigstens eine Auslaßöffnung (4) aufweist und von der Flüssigkeit (9) durchströmt wird, und wenigstens einem beweglichen Körper (5) im Inneren des Gehäuses (2), der von der Flüssigkeitsströmung entlang einer geschlossenen Bahn (6) bewegt wird, wobei die Umläufe des wenigstens einen Körpers (5) entlang der geschlossenen Bahn (6) erfaßt werden.

2. Durchflußmesser (1) nach Anspruch 1, dadurch gekennzeichnet, daß der wenigstens eine Körper (5) durch die Innenflächen des Gehäuses (2) und/oder durch Hindernisse (7, 8), die im Gehäuse (2) angeordnet sind, auf die geschlossene Bahn (6) gezwungen wird.

3. Durchflußmesser (1) nach Anspruch 1, dadurch gekennzeichnet, daß die Flüssigkeitsströmung in dem Gehäuse (2) einen Wirbel bildet und den wenigstens einen Körper (5) entlang des Wirbels bewegt.

4. Durchflußmesser (1) nach einem der Ansprüche 1 bis 3, dadurch gekennzeichnet, daß die Flüssigkeit (9) durch die wenigstens eine Einlaßöffnung (3) in einem flachen Winkel zur geschlossenen Bahn (6) des wenigstens einen Körpers (5) in das Gehäuse (2) einströmt.

5. Durchflußmesser (1) nach einem der Ansprüche 1 bis 4, dadurch gekennzeichnet, daß im Inneren des Gehäuses (2) wenigstens ein Hindernis (8) angeordnet ist, durch das die Flüssigkeit (9) hindurchströmen kann und das verhindert, daß der wenigstens eine Körper (5) zu der wenigstens einen Auslaßöffnung (4) gelangt.

6. Durchflußmesser (1) nach einem der Ansprüche 1 bis 5, dadurch gekennzeichnet, daß die geschlossene Bahn (6) , entlang derer sich der wenigstens eine Körper (5) bewegt, kreisförmig ist.

7. Durchflußmesser (1) nach einem der Ansprüche 1 bis 6, dadurch gekennzeichnet, daß der wenigstens eine Körper (5) kugelförmig ist.

8. Durchflußmesser (1) nach einem der Ansprüche 1 bis 7, dadurch gekennzeichnet, daß der wenigstens eine Körper (5) im wesentlichen das gleiche spezifische Gewicht wie die Flüssigkeit (9) hat.

9. Durchflußmesser (1) nach einem der Ansprüche 1 bis 8, dadurch gekennzeichnet, daß die Umläufe des wenigstens einen Körpers (5) optisch erfaßt werden.

10. Durchflußmesser (1) nach einem der Ansprüche 1 bis 9 dadurch gekennzeichnet, daß die Umläufe des wenigstens einen Körpers (5) magnetisch oder induktiv erfaßt werden.

11. Durchflußmesser (1) nach einem der Ansprüche 1 bis 10 in einem eine Flüssigkeit (9) führenden Gerät, das wenigstens ein die Flüssigkeit (9) führendes Teil aufweist, dadurch gekennzeichnet, daß das Gehäuse (2) des Durchflußmessers (1) in dem die Flüssigkeit (9) führenden Teil des Geräts ausgebildet ist.

12. Durchflußmesser (1) nach Anspruch 11 in einem eine Flüssigkeit (9) führenden Gerät, dadurch gekennzeichnet, daß das die Flüssigkeit (9) führende Teil, in dem das Gehäuse (2) des Durchflußmessers (1) ausgebildet ist, ein Kunsstoffspritzgußteil ist.

13. Durchflußmesser (1) nach Anspruch 11 in einem eine Flüssigkeit (9) führenden Gerät, dadurch gekennzeichnet, daß das Gerät ein Haushaltsgerät, insbesondere ein Wäschepflegegerät oder eine Geschirrspülmaschine, ist.
